# EUROPÄISCHE PATENTSCHRIFT

(11) **EP 4 001 696 B1**
(45) Veröffentlichungstag und Bekanntmachung des Hinweises auf die Patenterteilung: **17.01.2024**
(21) Anmeldenummer: 21208573.2
(22) Anmeldetag: 16.11.2021
(51) Int. Cl.: F16H 25/20, G01D 5/04, H02K 7/116

(54) **VORRICHTUNG ZUR BEWEGUNG VON EINRICHTUNGEN**
APPARATUS FOR MOVING DEVICES
DISPOSITIF DE DÉPLACEMENT DE DISPOSITIFS

(30) Priorität: 20.11.2020 DE 102020130782
(43) Veröffentlichungstag der Anmeldung: 25.05.2022
(73) Patentinhaber: Kesseböhmer Holding KG, 49152 Bad Essen (DE)
(72) Erfinder: Barkau, Rene, 49179 Ostercappeln (DE)
(74) Vertreter: Busse & Busse

(56) Entgegenhaltungen:
- WO-A1-2009/086831
- DE-A1-102014 222 354
- JP-A- 2003 322 233

## Beschreibung

Die Erfindung betrifft eine Vorrichtung zur Bewegung von Einrichtungen wie Hubtischen, Rolläden, Markisen oder dergleichen. Dabei handelt es sich insbesondere um eine translatorische Bewegung oder um eine rotatorische Bewegung. Die Vorrichtung umfasst einen Antrieb zur Erzeugung einer Drehbewegung und eine an einer Einrichtung anzuordnende Stellvorrichtung. Die Stellvorrichtung weist ein Stellelement auf, das mit dem Antrieb gekoppelt ist und um eine Stellachse drehbar ist. Weiterhin umfasst die Vorrichtung eine Sensorvorrichtung zur Ermittlung einer Stellung der Einrichtung bzw. des Stellelementes. Die Sensorvorrichtung weist einen als Winkelsensor ausgebildeten ersten Sensor zur Aufnahme von Sensordaten auf. Außerdem umfasst die Vorrichtung eine Steuervorrichtung, die zur Ansteuerung des Antriebs in Abhängigkeit von den Sensordaten ausgebildet ist. Die Sensorvorrichtung umfasst zumindest ein erstes Anzeigeelement, das um eine erste, von der Stellachse abweichende Anzeigeachse zumindest schwenkbar gelagert ist. Das erste Anzeigeelement ist außerdem mit dem Stellelement gekoppelt. Der erste Sensor ist zur Messung der Winkellage des ersten Anzeigeelementes ausgebildet. Die Sensorvorrichtung umfasst zumindest ein zweites Anzeigeelement, das um eine von der ersten Anzeigeachse abweichende, zweite Anzeigeachse zumindest schwenkbar gelagert ist. Das zweite Anzeigeelement ist mit dem Stellelement gekoppelt. Dem zweiten Anzeigeelement ist ein zweiter von der Sensorvorrichtung umfasster Sensor zur Aufnahme von Sensordaten zur Ermittlung der Stellung der Einrichtung zugeordnet ist.

Sämtliche Anzeigeelemente sind als Zahnrad ausgebildet. Sie weisen unterschiedliche Wälzkreisdurchmesser auf. Das Verhältnis der Wälzkreisdurchmesser benachbarter Anzeigeelemente liegt zwischen ½ und 2. Die Zähnezahlen der Anzeigeelemente haben keine gemeinsamen Primfaktoren.

Bekannt ist eine solche Vorrichtung aus der DE 10 2014 222 354 A1, die einen sog. Spindelaktor offenbart.

Nachteilig bei bekannten, derartigen Vorrichtungen ist ihr großer Bauraumbedarf. Außerdem bieten die Sensordaten in der Praxis häufig noch eine mangelhafte Datenbasis, die keine eindeutige Ermittlung der Stellung der Einrichtung in einem hinreichenden Umfang zulässt.

Aufgabe der vorliegenden Erfindung ist die Bereitstellung einer Vorrichtung, die die vorbeschriebenen Nachteile vermeidet. Diese Aufgabe wird nun mit einer Vorrichtung nach Anspruch 1 gelöst.

Erfindungsgemäß umfasst die Sensorvorrichtung zumindest ein drittes Anzeigeelement, das um eine von der ersten und der zweiten Anzeigeachse abweichende, dritte Anzeigeachse zumindest schwenkbar, d.h. schwenkbar oder drehbar, gelagert ist. Das dritte Anzeigeelement ist mit dem Stellelement gekoppelt. Außerdem ist dem dritten Anzeigeelement ein dritter von der Sensorvorrichtung umfasster Sensor zur Aufnahme von Sensordaten zur Ermittlung der Stellung der Einrichtung zugeordnet.

Durch diesen Aufbau lässt sich bereits mit wenigen Anzeigeelementen geringer Größe, insbesondere geringen Durchmessers, eindeutig die Stellung der Einrichtung feststellen. Durch die verhältnismäßig geringfügige Abweichung der Wälzkreisdurchmesser voneinander und die dabei charakteristische Abweichung hinsichtlich ihrer Primfaktoren erlaubt eine intelligente, eindeutige Feststellbarkeit der Stellung einzig anhand der Winkellagenkombination, ohne dass dafür weitere bauraumintesive Sensorik nötig wäre. Die Ausbildung einer formschlüssigen Verbindung erhöht außerdem die Zuverlässigkeit der Vorrichtung.

Die Winkellage meint die Orientierung, die durch eine Schwenk- oder Drehbewegung um die erste Anzeigeachse veränderbar ist.

Die Vorrichtung ist bevorzugt zur insbesondere translatorischen Bewegung von Hubtischen, Rolläden, Jalousien, Rolltoren, Rollgittern, Markisen, Fensterhebern, Kundenführungssystemen, Eingangsanlagen, Kassensperren, Zugangsführungsanlagen oder Werkzeugen ausgebildet. Diese werden im Betrieb freilich nicht notwendigerweise als Ganzes bewegt, sondern im Rahmen eines zu bewegenden Teils davon (z.B. Tischplatte, geführte Rollladenelemente etc.). Durch den Antrieb wird eine Drehbewegung erzeugt, welche durch die Vorrichtung oder durch ein Getriebe der Einrichtung insbesondere in eine translatorische Bewegung übersetzt wird. Der Antrieb ist insbesondere als Motor, bevorzugt als Elektromotor ausgebildet.

Mit dem Antrieb gekoppelt ist das Stellelement. Dabei ist das Stellelement bevorzugt ortsfest relativ zur einer Abtriebswelle des Antriebes oder durch das Ende der Abtriebswelle ausgebildet. Alternativ ist zwischen dem Antrieb und dem Stellelement ein beide Teile koppelndes Getriebe angeordnet. Die Antriebswelle rotiert im Betrieb insbesondere wie das Stellelement um die Stellachse.

Das erste Anzeigeelement ist insbesondere derart mit dem Stellelement gekoppelt, dass eine Rotationsgeschwindigkeit des ersten Anzeigeelementes proportional zu einer Rotationsgeschwindigkeit des Stellelementes ist. Das erste Anzeigeelement ist insofern zumindest schwenkbar um die erste Anzeigeachse, als es schwenkbar oder drehbar darum ist.

Der Winkelsensor ist insbesondere ein magnetischer, optischer oder potentiometrischer Sensor. Der Winkelsensor gibt je nach Orientierung des ersten Anzeigeelementes unterschiedliche Messwerte aus, wobei die Auflösung des Winkelsensors zumindest so hoch ist, dass dieser zur Unterscheidung zumindest vierer unterschiedlicher Winkellagen ausgebildet ist. Die Anzahl von durch den Winkelsensor zu unterscheidender Winkellagen ist insbesondere mindestens so groß wie eine Anzahl von Zähnen. Bevorzugt hat der Winkelsensor eine Auflösung von höchstens 5°, bevorzugt höchstens 1°.

Die Steuervorrichtung ist derart zur Ansteuerung des Antriebs ausgebildet, dass dessen Betriebszustand, -dauer und/oder -geschwindigkeit zumindest unter anderem vom ersten Sensor gemessenen Winkellage abhängt. Insbesondere ermöglicht die Steuervorrichtung das automatische Anfahren bestimmter Einrichtungskonfigurationen. Die Steuervorrichtung ist im Einzelnen insbesondere eine Elektronikeinheit, welche in räumlicher Nähe zum Antrieb angeordnet ist und/oder dessen Stromversorgung beeinflusst.

Vorteil des ersten Anzeigeelementes gegenüber bekannten Vorrichtungen ist die dadurch zur erzeugende fundiertere Sensordatenbasis, welche der Steuervorrichtung zur Verfügung gestellt werden kann. Insbesondere findet zwischen dem Stellelement und/oder dem Antrieb und dem ersten Anzeigeelement eine Untersetzung statt, die im Extremfall ermöglicht, dass die gesamte durch die Vorrichtung zu erreichende Bewegung in eine Schwenkbewegung des ersten Anzeigeelementes um < 360° übersetzt wird. Somit ist jeder unmittelbar messbaren Winkellage des ersten Anzeigeelementes eindeutig eine Stellung der Einrichtung zuzuordnen. Alternativ oder zusätzlich dazu wird neben dem ersten Anzeigeelement die Lage eines damit gekoppelten, weiteren Elementes der Vorrichtung überwacht, wobei sich durch eine Kombination der jeweiligen Daten ebenso eine eindeutige Ermittlung der Stellung der Einrichtung ermöglicht ist. Das führt dazu, dass die erfindungsgemäße Vorrichtung in jedem Betriebszustand zuverlässig Kenntnis von der Stellung der Einrichtung hat und vollumfänglich betrieben werden kann, ohne dass eine vorherige Kalibrierung oder die Eingabe eines Referenzwertes notwendig ist. Das führt insbesondere bei mobilen Einrichtungen zu einem deutlich größeren Komfort und zu einer effektiveren Nutzung der Vorrichtung.

Insbesondere ist das zweite Anzeigeelement ortsfest relativ zum Stellelement oder relativ zur Abtriebswelle oder gar einstückig mit dem Stellelement oder der Abtriebswelle ausgebildet. Alternativ oder zusätzlich sind das zweite Anzeigeelement und das Stellelement und/oder die Abtriebswelle mittels eines Getriebes gekoppelt. Insbesondere ist die zweite Anzeigeachse koaxial mit der Stellachse angeordnet. Dem zweiten Anzeigeelement ist ein zweiter von der Sensorvorrichtung umfasster Sensor zugeordnet, der ebenso wie der erste Sensor zur Aufnahme von Sensordaten zur Ermittlung der Stellung der Einrichtung ausgebildet ist. Der zweite Sensor ist dem zweiten Anzeigeelement dabei insbesondere insofern zugeordnet, als er einen Zustand des zweiten Anzeigeelementes, insbesondere seine Position und/oder Form, misst.

Das zweite Anzeigeelement hat im Betrieb bevorzugt zumindest zeitweise Kontakt zum ersten Anzeigeelement. Die Steuervorrichtung ist insbesondere zur Ansteuerung des Antriebs in Abhängigkeit von Sensordaten ausgebildet, die zu einem Teil auf den ersten Sensor und zu einem anderen Teil auf den zweiten Sensor zurückgehen. Durch die Verwendung zweier Sensoren an sich bei einer Bewegung des Stellelementes insbesondere unterschiedlich verhaltenden Anzeigeelementen lässt sich die zur Ermittlung der absoluten Stellung der Einrichtung notwendige Datenbasis auch für einen Drehwinkel des Stellelementes bzw. der Abtriebswelle von mehr als 360° ermitteln, ohne dass dazu eine Untersetzung auf das erste Anzeigeelement notwendig ist.

Zur weiteren Vergrößerung der Datenbasis weist die Sensorvorrichtung bevorzugt zumindest ein viertes Anzeigeelement auf, das um eine vierte Anzeigeachse zumindest schwenkbar, d.h. schwenkbar oder drehbar, gelagert ist. Die vierte Anzeigeachse weicht dabei von der ersten, der zweiten und der dritten Anzeigeachse bevorzugt ab. Das vierte Anzeigeelement ist mit dem Stellelement gekoppelt. Dem vierten Anzeigeelement ist ein vierter von der Sensorvorrichtung umfasster Sensor zur Aufnahme von Sensordaten zur Ermittlung der Stellung der Einrichtung zugeordnet.

Bevorzugt ist zumindest ein Teil der Anzeigeelemente, insbesondere jedes der Anzeigeelemente, mittelbar oder unmittelbar kraft- oder formschlüssig mit dem Stellelement oder der Abtriebswelle gekoppelt. Insbesondere das zweite Anzeigeelement kann dabei auch stoffschlüssig unmittelbar an dem Stellelement oder der Abtriebswelle angeordnet sein. Eine unmittelbare Kopplung meint dabei, dass das jeweilige Anzeigeelement unmittelbaren Kontakt zum Stellelement bzw. zur Abtriebswelle hat. Eine mittelbare Kopplung ist etwa gegeben, wenn zwischen dem jeweiligen Anzeigeelement und dem Stellelement bzw. der Abtriebswelle ein Getriebe oder beispielsweise lediglich ein Zwischenrad oder zumindest ein weiteres Anzeigeelement angeordnet ist.

Besonders bevorzugt sind die Anzeigeelemente derart gekoppelt, dass bei einer Drehung des Stellelementes das erste und das zweite Anzeigeelement eine betragsmäßig übereinstimmende Umfangsgeschwindigkeit haben. Das betrifft insbesondere auch das erste und dritte bzw. dritte und vierte Anzeigeelement. Im bestimmungsgemäßen Betrieb löst eine Bewegung des Stellelementes zwangsweise eine Bewegung der Anzeigeelemente aus, deren Schwenk- bzw. Drehgeschwindigkeit insbesondere proportional zu derjenigen des Stellelementes ist. Vorzugsweise ist das erste Anzeigeelement derart zwischen dem zweiten und dem dritten Anzeigeelement angeordnet, dass im Betrieb von dem zweiten Anzeigeelement eine Kraft auf das erste Anzeigeelement und von dem ersten Anzeigeelement eine Kraft auf das dritte Anzeigeelement übertragen wird. Bei Vorhandensein eines vierten Anzeigeelementes wird im Betrieb insbesondere eine Kraft von dem dritten Anzeigeelement auf das vierte Anzeigeelement übertragen. In alternativen, bevorzugten Ausgestaltungsformen der Erfindung überträgt das Stellelement oder die Abtriebswelle eine Kraft auf sämtliche Anzeigeelemente, die nicht unmittelbar verbunden sind, oder sind die Anzeigeelemente anderweitig gekoppelt.

Die Anzeigeelemente, welche eine Kraft aufeinander übertragen, kämmen dazu insbesondere miteinander. Vorzugsweise stehen die Anzeigeelemente jeweils lediglich mit einem oder zwei weiteren Anzeigeelement/en im Eingriff. Alternativ zur Ausbildung als Zahnrad ist zumindest ein Teil der Anzeigeelemente als Reibrad ausgebildet, wobei benachbarte, als Reibräder ausgebildete Anzeigeelemente insbesondere entweder unmittelbar aneinander anliegen oder mittels eines die Anzeigeelemente umschlingenden Riemens gekoppelt sind.

Vorzugsweise sind/ist der erste, der dritte und/oder der vierte Sensor zumindest dazu ausgebildet, festzuhalten, wenn das zweite, das dritte bzw. das vierte Anzeigeelement eine bestimmte Winkellage überschreitet. Bevorzugt sind/ist der zweite, der dritte und/oder der vierte Sensor als Winkelsensor ausgebildet. Insbesondere gleichen bzw. gleicht der zweite, der dritte und/oder der vierte Sensor/en dem ersten Sensor.

Die Anzeigeelemente weisen unterschiedliche Wälzkreisdurchmesser auf. Durch die unterschiedlichen Wälzkreisdurchmesser und die den Anzeigeelementen zugeordneten Sensoren lässt sich die Stellung der Einrichtung erschöpfend ermitteln, ohne dass dazu eine Untersetzung der Drehbewegung des Stellelementes auf eine Schwenkbewegung um weniger als 360° nötig ist. Insbesondere ist überhaupt keine Untersetzung auf das erste Anzeigeelement nötig. Stattdessen ist Grundlage der Ermittlung der Stellung der Einrichtung, dass die Anzeigeelemente pro Umdrehung des Stellelementes um unterschiedliche Winkel verschwenkt bzw. verdreht werden. Unterschiedliche Stellungen der Einrichtung können somit, auch wenn zwischen ihnen eine Mehrzahl von Umdrehungen des Stellelementes liegt oder das Stellelement in beiden Stellungen gar die gleiche Winkellage aufweist, somit eindeutig anhand der Kombination von Winkellagen der Anzeigeelemente ermittelt werden.

Insbesondere ist das Wälzkreisdurchmesser- bzw. Zähnezahlverhältnis der Anzeigeelemente derart gewählt, dass jede Stellung entlang der durch die Vorrichtung umzusetzenden Bewegung eindeutig durch die Kombination der Winkellagen der Anzeigeelemente dargestellt werden kann. Das bedeutet auch, dass entlang der Bewegung keine Kombination von Winkellagen der Anzeigeelemente zweifach auftritt.

Durch die nicht weiter gegebene Notwendigkeit einer deutlichen, meist mehrstufigen Untersetzung baut die Vorrichtung signifikant kleiner. Insbesondere genügen bereits zwei verhältnismäßig kleine Anzeigeelemente, um Stellungen der Einrichtung in einem weitreichenden Umfang eindeutig identifizieren zu können. Hierdurch ist die Vorrichtung besonders kompakt und in unterschiedlichsten Anwendungsgebieten einsetzbar.

Alternativ zur Ausbildung des zweiten, des dritten und/oder des vierten Sensors als Winkelsensor sind/ist diese/dieser als Drehimpulsgeber ausgebildet. Der Drehimpulsgeber ist insbesondere zur Ausgabe einer bestimmten Anzahl von Impulsen pro Umdrehung des jeweiligen Anzeigeelementes ausgebildet. Bevorzugt ist der Drehimpulsgeber zur Ausgabe genau eines Impulses pro Umdrehung des jeweiligen Anzeigeelementes ausgebildet. Der Drehimpulsgeber ist insbesondere als mechanischer Schalter, als Reed-Schalter, als Hall-Sensor oder als Lichtschranke ausgebildet. Die Anzahl der Impulse pro Umdrehung entspricht insbesondere einer Anzahl von Teilstrichen, die sich über einen Umfang des jeweiligen Anzeigeelementes insbesondere äquidistant in die Umfangsrichtung verteilen. Der Drehimpulsgeber ist insbesondere ein Inkrementalgeber. Bei Verwendung des Drehimpulsgebers anstelle des Winkelsensors lässt sich zwar nicht jede Stellung der Einrichtung unmittelbar anhand der im Stillstand vorliegenden Sensordaten ermitteln. Jedoch genügt zur Ermittlung bereits eine geringfügige Drehbewegung des Antriebs, bis der Drehimpulsgeber einen Impuls ausgibt. Bei üblichen Ausbildungen des Stellelementes entspricht das typischerweise einer translatorischen Bewegung von weniger als 1 cm, wobei dieser Wert je nach Konstruktion des Stellelementes beliebig zu reduzieren ist. Auf Basis der von dem ersten Sensor gemessenen Winkellage des ersten Anzeigeelementes während der Ausgabe des Impulses, der insbesondere eine Nulllage des jeweiligen, weiteren Anzeigeelementes kennzeichnet, lässt sich wiederum die Stellung der Einrichtung eindeutig ermitteln. Der geringfügige Nachteil einer hierzu notwenigen, minimalen Bewegung der Einrichtung wird aufgewogen durch den einfacheren und kostengünstigeren Aufbau, den der Drehimpulsgeber gegenüber einem Winkelsensor bedeutet. Hierdurch sinken Bauraumbedarf und Herstellungskosten der Vorrichtung, wodurch sie auf für weitere Anwendungsfälle in Frage kommt. Zur weiteren Senkung der Herstellungskosten sind vorzugsweise sämtliche Sensoren als Drehimpulsgeber ausgebildet, die, insbesondere eine konstante Drehzahl des Stellelementes vorausgesetzt, durch die zeitliche Abfolge der ausgegebenen Impulse die Ermittlung der Stellung ermöglichen können.

Bei Vorhandensein von drei oder vier Anzeigeelementen lassen sich die drei bzw. vier Sensoren unterschiedlich ausbilden bzw. kombinieren. Zugunsten eines größtmöglichen Komforts lassen sich sämtliche Sensoren als Winkelsensor ausbilden. Zur Einsparung von Kosten lassen sich ebenso alle Sensoren bis auf einen Sensor bzw. den ersten Sensor als Drehimpulsgeber ausbilden. Hier ist die Einrichtung aus der zu bestimmenden Stellung so weit zu bewegen, bis sämtliche Drehimpulsgeber zumindest einen Impuls ausgegeben haben, der jeweils einer bestimmten Winkellage des ersten Anzeigeelementes zugeordnet wird. In der Praxis hat sich gezeigt, dass bei der Verwendung von vier Anzeigeelementen die Verwendung von je zwei Drehimpulsgebern und Winkelsensoren einen für eine Vielzahl von Anwendungen optimalen Kompromiss zwischen Komfort und einfachem Aufbau darstellt.

Vorzugsweise unterscheiden sich die Wälzkreisdurchmesser der Anzeigeelemente derart, dass der Wälzkreisdurchmesser des ersten Anzeigeelementes größer ist, als der Wälzkreisdurchmesser des zweiten Anzeigeelementes. Insbesondere ist außerdem gegebenenfalls der Wälzkreisdurchmesser des dritten Anzeigeelementes größer als der Wälzkreisdurchmesser des ersten Anzeigeelementes. Insbesondere ist außerdem gegebenenfalls der Wälzkreisdurchmesser des vierten Anzeigeelementes größer als der Wälzkreisdurchmesser des dritten Anzeigeelementes. Dabei sind die vorgenannten Verhältnisse der Wälzkreisdurchmesser im Falle einer Ausbildung der Anzeigeelemente als Zahnräder mit den Zähnezahlverhältnissen gleichzusetzen, so dass etwa die Zähnezahl des ersten Anzeigeelementes größer ist als die Zähnezahl des zweiten Anzeigeelementes.

Bei Vorhandensein von zwei Anzeigeelementen, wovon das zweite Anzeigeelement im Betrieb mit dem Stellelement und/oder der Abtriebswelle rotiert, hängt die Anzahl von Umdrehungen des Stellelementes bzw. des Antriebs, über die die Stellung der Einrichtung eindeutig ermittelt werden kann, im Falle der Ausbildung der Anzeigeelemente als Zahnräder einzig von der Zähnezahl des ersten Anzeigeelementes ab. Für den Fall, dass das erste Anzeigeelement elf und das zweite Anzeigeelement neun Zähne hat, erreichen beide Anzeigeelemente ihre Ausgangsstellung, nachdem das erste Anzeigeelement neun und das zweite Anzeigeelement elf Umdrehungen zurückgelegt hat. Da die Zähnezahl des ortsfest zu einem Teil des Triebstranges des Stellelementes angeordneten zweiten Anzeigeelementes hier keine Relevanz entfaltet, ist die Zähnezahl bzw. der Wälzkreisdurchmesser des ersten Anzeigeelementes zugunsten einer größeren Kompaktheit des Systems größer zu wählen.

Bei Vorhandensein von drei oder vier Anzeigeelementen ergibt sich die Anzahl von Drehungen des Stellelementes bzw. des Antriebs, über die die Stellung der Einrichtung einer der Sensordaten eindeutig zu bestimmen ist, als Produkt aus den Zähnezahlen des ersten Anzeigeelementes und des dritten Anzeigeelementes und gegebenenfalls des vierten Anzeigeelementes. Hat das dritte Anzeigeelement aufbauend auf das vorgenannte Beispiel etwa eine Zähnezahl von 13, so ist die Anzahl von Umdrehungen des Stellelementes bzw. des Antriebs, über die die Stellung der Einrichtung eindeutig ermittelt werden kann, 123 (11 × 13).

Bevorzugt weichen die Wälzkreisdurchmesser der Anzeigeelemente von Vielfachen der Wälzkreisdurchmesser der jeweils anderen Anzeigeelemente jeweils ab. Aufbauend auf dem vorbeschriebenen Beispiel führte eine Zähnezahl von 18 des ersten Anzeigeelementes, die eine Verdopplung der Zähnezahl von 9 des zweiten Anzeigeelementes darstellte, dazu, dass das Stellelement bzw. der Antrieb lediglich 2 (statt 18) Umdrehungen ausführen könnte, bevor die Anzeigeelemente ihre Ausgangslage wieder erreichen und keine eindeutige Ermittlung der Stellung der Einrichtung mehr erfolgen kann. Außerdem ist es zugunsten einer größeren Kompaktheit der Vorrichtung sinnvoll, die Anzeigeelemente mit sich nur geringfügig unterscheidenden Zähnezahlen auszustatten.

Das Verhältnis der Wälzkreisdurchmesser bzw. Zähnezahlen benachbarter Anzeigeelemente liegt zwischen 1/2 und 2, besonders bevorzugt zwischen 2/3 und 1,5. Benachbart sind Anzeigeelemente dann, wenn diese zumindest zeitweise unmittelbar in Kontakt miteinander stehen oder entlang des Weges ihrer Kraftübertragung aufeinander kein weiteres Anzeigeelement zwischengeordnet ist. Durch derartig ähnliche Wälzkreisdurchmesser bzw. Zähnezahlen lässt sich die Vorrichtung besonders kompakt aufbauen.

Die Zähnezahlen zumindest zweier der Anzeigenelemente haben keine gemeinsamen Primfaktoren. Insbesondere haben sämtliche Anzeigeelemente keine gemeinsamen Primfaktoren. Das bedeutet, dass der größte gemeinsame Teiler der Zähnezahlen 1 ist. Alternativ dazu ist der kleinste gemeinsame Primfaktor möglichst groß.

Besonders bevorzugt ist zumindest eine der Zähnezahlen eine Primzahl. Insbesondere sind sämtliche Zähnezahlen Primzahlen. Hierdurch wird das Phänomen vermieden, was betreffend die Vielfachen vorbeschrieben ist. Insbesondere führen auch bereits gemeinsame Primfaktoren dazu, dass die Anzahl an Winkellagenkombinationen nicht ausgeschöpft werden kann, da die Anzeigeelemente ihre Ausgangslagen bereits wieder erreichen, bevor sie eine Anzahl von Umdrehungen zurückgelegt haben, die der Zähnezahl des jeweils anderen Anzeigeelementes entspricht. Die Vermeidung gemeinsamer Primfaktoren bzw. die Verwendung von Primzahlen führt zu einer bestmöglichen Ausschöpfung möglicher Winkellagenkombinationen und damit zur Möglichkeit einer Ermittlung der Stellung der Einrichtung über eine besonders große Zahl von Umdrehungen des Stellelementes bzw. des Antriebes bei geringstmöglichem Bauraumbedarf.

Vorzugsweise ist eine erste der Zähnezahlen eine erste Primzahl und eine zweite der Zähnezahlen eine zweite, entlang der Primzahlenfolge benachbarte Primzahl. Insbesondere sind die Zähnezahlen benachbarter Anzeigeelemente entlang der Primzahlenfolge benachbarte Primzahlen. Statt der zweiten Primzahl ist die zweite der Zähnezahlen bevorzugt eine Zahl, die zwischen der ersten Primzahl und einer entlang der Primzahlenfolge benachbarten Primzahl liegt. Durch die Zähnezahlenauswahl wird unter Wahrung der vorbeschriebenen Vorteile erreicht, dass die Wälzkreisdurchmesser der genannten Anzeigeelemente möglichst wenig voneinander abweichen, wodurch sich eine besonders große Kompaktheit der Vorrichtung realisieren lässt.

Vorzugsweise ist sind die Zähnezahlen sämtlicher Anzeigeelemente jeweils kleiner als 30, bevorzugt kleiner als 25, besonders bevorzugt kleiner als 20. Hierdurch lässt sich ein großer Bauraum ebenso wie ein besonders kleines Modul vermeiden, dass einer zuverlässigen Kraftübertragung mit möglichst geringem Widerstand entgegenstünde. Insbesondere ist die Zähnezahl des zweiten Anzeigeelementes ≤ 9, die Zähnezahl des ersten Anzeigeelementes ≤ 11, die Zähnezahl des dritten Anzeigeelementes ≤ 13 und/oder die Zähnezahl des vierten Anzeigeelementes ≤ 17.

Vorzugsweise weist die Stellvorrichtung ein Gewindespindelelement und ein Schlittenelement auf, das an dem Gewindespindelelement gelagert ist und bei einer Rotation des Gewindespindelelementes um die Stellachse entlang der Stellachse verschoben wird. Insbesondere ist dabei das Stellelement als Gewindespindelelement ausgebildet. Das Gewindespindelelement ist insbesondere eine Welle mit einem Außengewinde. Das Schlittenelement ist insbesondere als Hülse mit einem dem Außengewinde des Gewindespindelelementes entsprechenden Innengewinde ausgebildet. Das Schlittenelement hat in die Stellachse insbesondere eine kürzere Erstreckung als das Außengewinde des Gewindespindelelementes, wodurch es entlang der Stellachse verschoben werden kann. Das Schlittenelement wird dabei bevorzugt ausschließlich verschoben und hat keinen rotatorischen Bewegungsanteil. Alternativ ist das Stellelement lediglich eine Ende der Abtriebswelle oder eine weitere zu verbindende Welle der Vorrichtung, die bei der Montage erst mit einer nicht von der Vorrichtung umfassten Gewindespindel verbunden wird.

Das Stellelement ist insbesondere derart ausgebildet, dass das Schlittenelement um zumindest 10 cm, bevorzugt um zumindest 20 cm, besonders bevorzugt um zumindest 30 cm entlang der Stellachse verschoben werden kann. Die Steigung des Außengewindes liegt bevorzugt zwischen 0,5 und 10 mm, besonders bevorzugt zwischen 1 und 5 mm und in einer besonders vorteilhaften Ausführungsform zwischen 2 und 3 mm. Durch diesen Aufbau ist die Vorrichtung für eine Vielzahl unterschiedlicher Anwendungen geeignet und die Bewegung der Einrichtung zuverlässig umsetzbar. Die Steigung ist insbesondere derart gewählt, dass die Paarung aus Gewindespindelelement und Schlittenelement selbsthemmend ausgebildet ist. Das bedeutet, dass eine Rotation des Gewindespindelelementes nicht durch eine Verschiebung des Schlittenelementes ausgelöst werden kann. Hierdurch kann eine unkontrollierte Verschiebung der Einrichtung vermieden werden.

Vorzugsweise umfasst der Antrieb einen Motor, insbesondere einen Elektromotor. Der Antrieb ist insbesondere bezogen auf die Stellachse zwischen dem Stellelement und der Sensorvorrichtung angeordnet. Hierzu hat der Motor insbesondere einen beidseitigen Abtrieb, einen Abtrieb zur Drehung des Stellelementes und einen weiteren Abtrieb zur Drehung der Anzeigeelemente. Die Abtriebe sind dabei insbesondere durch dieselbe Abtriebswelle oder unterschiedliche Abtriebswellen des Antriebs ausgebildet Dieser Aufbau ist insofern besonders platzsparend, als die Sensorvorrichtung mit ihrem zumindest einen Anzeigeelement nicht seitlich des Triebstranges zwischen Motor und Stellelement oder seitlich des Stellelementes anzuordnen ist, was bezogen auf die Stellachse zu einer großen radialen Erstreckung der Vorrichtung führte. Stattdessen wird die Sensorvorrichtung gegenüber des Stellelementes am Motor angeordnet, was eine besonders schlanke, längliche Bauweise der Vorrichtung ermöglicht.

Vorzugsweise ist zwischen dem Antrieb und dem Stellelement ein Untersetzungsgetriebe angeordnet. Das hierdurch erreichte Übersetzungsverhältnis beträgt insbesondere mindestens 5, bevorzugt mindestens 10, besonders bevorzugt genau 11,4. Dadurch dreht sich im Betrieb das Stellelement deutlich langsamer als der Antrieb und entfaltet ein größeres Drehmoment, was die Verwendung eines Elektromotors ermöglicht, der besonders klein baut. Elektromotoren bauen dann besonders klein, wenn das Verhältnis zwischen Nenndrehzahl und Nenndrehmoment groß ist. Insbesondere lässt sich ein Elektromotor als Antrieb verwenden, dessen Nenndrehmoment lediglich 140 mNm beträgt.

Das Untersetzungsgetriebe ist insbesondere als Planetengetriebe ausgebildet. Dabei sind eine Abtriebsachse, um die eine Abtriebswelle des Antriebs rotiert, und die Stellachse bevorzugt koaxial zueinander angeordnet. Durch die Verwendung des Planetengetriebes lässt sich das Untersetzungsgetriebe besonders platzsparend ausbilden und insbesondere eine von der Stellachse ausgehende radiale Erstreckung der Vorrichtung begrenzen. Alternativ zum Planetengetriebe ist das Untersetzungsgetriebe insbesondere als Schneckengetriebe ausgebildet. Bevorzugt ist das Untersetzungsgetriebe ein selbsthemmendes Getriebe, sodass etwa eine am Stellelement anliegende Last nicht auf den Antrieb übertragbar ist und abgefangen werden müsste.

Vorzugsweise umfasst die Vorrichtung ein Gehäuse, das den Antrieb, die Sensorvorrichtung, zumindest einen Teil der Steuervorrichtung und zumindest einen Teil des Stellelementes einhaust. Insbesondere wird durch das Gehäuse auch das Untersetzungsgetriebe eingehaust. Das Stellelement ragt zu seiner Kopplung mit der Einrichtung insbesondere aus dem Gehäuse hinaus. Durch das Gehäuse wird die Vorrichtung zu einer kompakten Antriebseinheit, die als gesamte auf einfache Weise an unterschiedlichen Einrichtungen montiert werden kann und keine gesonderte Montage etwa der Sensorvorrichtung erfordert.

Das Gehäuse ist bevorzugt zumindest im Wesentlichen zylinderförmig ausgebildet. Zumindest in einem Querschnitt des Gehäuses ist das Gehäuse besonders bevorzugt zumindest im Wesentlichen kreisförmig dargestellt. Eine Längsmittelachse des Gehäuses fällt dabei insbesondere mit der Stellachse zusammen. Das Gehäuse ist bevorzugt patronenförmig ausgebildet, wobei sein Durchmesser deutlich geringer ist, als seine Länge. Insbesondere beträgt der Durchmesser zumindest im Wesentlichen 4,8 cm und die Länge des Gehäuses höchstens 60 cm. Durch diese Form des Gehäuses und insbesondere den vorbeschriebenen Aufbau der Vorrichtung ist dieses besonders kompakt und in unterschiedlichsten Einrichtungen einsetzbar, ohne dass dafür in signifikantem Ausmaß gesonderter Bauraum geschaffen werden muss.

Gegenüber des Stellelementes weist die Vorrichtung bevorzugt ein Verbindungselement zu ihrer Verbindung mit dem Stromnetz auf. Das Verbindungselement dient insbesondere zur Kopplung mit einem Netzkabel und/oder zur Versorgung des von dem Antrieb umfassten Motors. Das Verbindungselement ist insbesondere ein Stecker oder eine Steckbuchse, dessen bzw. deren Steckrichtung insbesondere parallel zur Stellachse angeordnet ist. Hierdurch ist wiederum der Bauraum insbesondere in zur Stellachse radialer Richtung verringert und die Führung eines Kabels entlang einer Mantelfläche des Gehäuses vermieden. Alternativ oder zusätzlich zum Netzbetrieb umfasst die Vorrichtung bevorzugt einen Akkumulator, der insbesondere austauschbar in oder an dem Gehäuse fixiert werden kann.

Vorzugsweise umfasst das Gehäuse zumindest zwei einander gegenüberliegende, bezogen auf seine Längsmittelachse radial vorstehende Drehmomentabstützelemente. Diese dienen zur formschlüssigen Montage des Gehäuses in den Einrichtungen. Die Drehmomentabstützelemente verhindern eine Drehung des Gehäuses bei beabsichtigter Drehung des Stellelementes. Durch die Drehmomentabstützelemente ist eine gesonderte Fixierung des Gehäuses zur Vermeidung seiner Drehung nicht weiter nötig.

Bevorzugt weist die Steuervorrichtung einen Speicher zur Speicherung zumindest einer Einrichtungskonfiguration auf. Der Speicher ist insbesondere remanent ausgebildet und/oder als ROM-Speicher (read only memory) ausgebildet. Alternativ oder zusätzlich weist die Steuervorrichtung zumindest eine Benutzerschnittstelle zur Variation der Einrichtungskonfiguration auf. Die Benutzerschnittstelle ist insbesondere nicht von dem Gehäuse eingehaust. Die Benutzerschnittstelle ist insbesondere zur drahtlosen oder kabelgebundenen Kommunikation mit einem weiteren, vom Gehäuse eingehausten Teil der Steuervorrichtung ausgebildet. Bevorzugt ist die Benutzerschnittstelle gemeinsam mit dem Verbindungselement durch ein weiteres Gehäuse eingehaust, das insbesondere von der Einrichtung ausgebildet ist. Die gespeicherte Einrichtungskonfiguration ist insbesondere eine z.B. bedienerabhängige Zielstellung der Einrichtung, die bei einer entsprechenden Eingabe durch den Bediener mittels der Benutzerschnittstelle automatisch durch die Vorrichtung angefahren werden kann. Die Benutzerschnittstelle weist bevorzugt sowohl Eingabemittel zum Auslösen eines automatischen Anfahrens der gespeicherten Einrichtungskonfiguration als auch Eingabemittel zur manuellen Variation der Stellung der Einrichtung auf.

Vorzugsweise verdeckt zumindest eines der Anzeigeelemente bei einer Betrachtung der Sensorvorrichtung in Richtung der Stellachse oder in Richtung der Längsmittelachse des Gehäuses ein weiteres der Anzeigeelemente zumindest teilweise. Das bedeutet, dass die Anzeigeelemente nicht lediglich in ihre radialen Richtungen zueinander versetzt sind, sondern zumindest zwei Anzeigeelemente in eine axiale Richtung zueinander versetzt angeordnet sind. Die in die axiale Richtung versetzten Anzeigeelemente kämmen insbesondere mit demselben weiteren bzw. dritten Anzeigeelement. Die Anzeigeachsen sämtlicher Anzeigeelemente sind dabei insbesondere parallel zueinander sowie zur Längsmittelachse und/oder zur Stellachse angeordnet. Durch diese Ausbildung wird wiederum eine besonders große Kompaktheit erreicht und insbesondere eine größere radiale Erstreckung der Vorrichtung bzw. des Gehäuses vermieden. In einer alternativen Ausführungsform, die eine größere axiale Erstreckung der Vorrichtung bzw. des Gehäuses vermeidet, liegen sämtliche Anzeigeachsen in einer Längsebene, in der auch die Stellachse angeordnet ist oder zu der die Stellachse parallel verläuft.

Bei einer parallelen Anordnung der Anzeigeachsen spannen die Schnittpunkte dreier der Anzeigeachsen mit einer zu den Anzeigeachsen rechtwinkligen Hilfsebene bevorzugt ein spitzwinkeliges Dreieck auf. Insbesondere betrifft das die erste, zweite und dritte Anzeigeachse und/oder die erste, dritte und vierte Anzeigeachse. Hierdurch werden unnötige den Bauraum des Gehäuses vergrößernde Zwischenräume vermieden.

Vorzugsweise weist die Steuervorrichtung zumindest eine Leiterplatte, insbesondere mehrere Leiterplatten, auf. Die Stellachse und/oder die Längsmittelachse erstrecken/erstreckt sich bevorzugt parallel zu der Leiterplatte bzw. zur Leiterplattenebene, in der sich die Leiterplatte flächig erstreckt. Zwischen der Stellachse bzw. Längsmittelachse und der Leiterplatte ist bevorzugt zumindest ein Teil zumindest eines der Anzeigeelemente angeordnet. Insbesondere umgeben die Leiterplatten der Steuervorrichtung die Anzeigeelemente der Sensorvorrichtung zumindest teilweise. Bevorzugt ist zumindest einer der Sensoren an der zumindest einen Leiterplatte angeordnet, um weiteren Platz einzusparen.

Die Leiterplatte ist insbesondere als Platine ausgebildet. Die Steuervorrichtung umfasst insbesondere zumindest drei, bevorzugt fünf Leiterplatten, die wie vorbeschrieben angeordnet sind. Die zumindest eine Leiterplatte ist insbesondere zwischen Gehäuse und dem Teil des zumindest einen Anzeigeelementes angeordnet. Insbesondere erstrecken sich die Leiterplatten um einen überwiegenden Teil des Umfangs der Vorrichtung. Besonders bevorzugt ist die zumindest eine Leiterplatte bzw. sind die Leiterplatten als Semi-Flex-Platinen ausgeführt oder mittels Semi-Flex-Platinen verbunden, wodurch aufwendige Steckverbindungen und Kontaktierungen weitgehend reduziert werden können. Die Positionierung der zumindest einen Leiterplatte führt wiederum zu einer größeren Kompaktheit der Vorrichtung. Insbesondere hat der Antrieb einen größeren Durchmesser als die Sensorvorrichtung, weshalb bei einem über die Länge weitgehend konstanten Durchmesser des Gehäuses ein Zwischenraum zwischen Sensorvorrichtung und dem Gehäuse existiert, der hiermit besonders effektiv genutzt ist.

Als weitere Lösung der Aufgabe wird ein Hubtisch offenbart. Der Hubtisch weist eine Tisch- oder Arbeitsplatte auf, deren Abstand von einer Aufstandsfläche variabel ist. Hierzu weist der Hubtisch eine vor- und/oder nachbeschriebene Vorrichtung auf.

Bevorzugt ist die Vorrichtung als Teil des Hubtisches derart angeordnet, dass die Stellachse und insbesondere die Anzeigeachsen vertikal insbesondere mit Bezug auf die Aufstandsfläche verlaufen. Damit erstreckt sich insbesondere auch das Gehäuse länglich in die vertikale Richtung. Besonders bevorzugt ist die Vorrichtung an oder in einem Tischbein des Hubtisches angeordnet. Durch die schlanke Form des Gehäuses lässt sich die Vorrichtung vollständig innerhalb des Tischbeins anordnen, ohne dass das Tischbein dafür ungewöhnlich große Ausmaße haben müsste. Innerhalb des Tischbeins oder am Tischbein ist die Vorrichtung insbesondere derart positioniert, dass der Antrieb oberhalb des Stellelementes und/oder unterhalb der Sensorvorrichtung angeordnet ist.

Vorzugsweise weist der Hubtisch zumindest zwei Vorrichtungen auf, die an oder in unterschiedlichen Tischbeinen angeordnet sind. Die unterschiedlichen Tischbeine finden sich insbesondere unterhalb unterschiedlicher Enden der Tisch- oder Arbeitsplatte. Insbesondere sind die Tischbeine unterhalb sich gegenüberliegender Kopfenden der Tisch- oder Arbeitsplatte angeordnet. Durch die beidseitig angeordneten Vorrichtungen wird eine Symmetrie und damit eine gesteigerte Stabilität bei der Bewegung des Hubtisches bzw. seiner Tisch- oder Arbeitsplatte erreicht. Insbesondere weist der Hubtisch kein Tischbein auf, an oder in dem keine Vorrichtung angeordnet ist.

Vorzugsweise weist der Hubtisch zumindest ein vom Schlittenelement zumindest einer der Vorrichtungen umfasstes Umlenkelement sowie ein im Betrieb vom Umlenkelement umgelenktes, insbesondere biegeschlaffes Verbindungselement auf. Das Verbindungselement ist einenends ortsfest relativ zur Tisch- oder Arbeitsplatte und anderenends ortsfest zur Aufstanzfläche angeordnet und umgibt das Umlenkelement um einen Teil seines Umfangs. Durch das Verbindungselement und das Umlenkelement lässt sich die Bewegung des Schlittenelementes in Richtung der Stellachse nach Art eines Flachenzuges übersetzen. In der einfachsten Ausbildung wird hierdurch erreicht, dass der Verfahrweg der Tisch- oder Arbeitsplatte doppelt so groß ist wie der Verfahrweg des Schlittenelements. Insbesondere weist das Schlittenelement zwei Umlenkelemente auf, die unterschiedliche Verbindungselemente führen, die gegenläufig zueinander geführt sind, damit die Funktion der Vorrichtung auch in einem Zustand gewährleistet ist, in dem ein Absenken der Tisch- oder Arbeitsplatte nur entgegen eines Widerstands möglich ist. Das Umlenkelement ist insbesondere als drehbares Rad und/oder das Verbindungselement insbesondere als Seil oder Band ausgebildet.

Die Aufgabe wird weiterhin gelöst durch eine Rollvorrichtung mit einer Einrichtung, die in einer abgerollten Stellung eine zumindest im Wesentlichen ebene Wandung ausbildet und in einer aufgerollten Stellung eine Rollachse insbesondere mehrlagig umgibt. Die Rollvorrichtung weist zumindest eine vor- und/oder nachbeschriebene Vorrichtung auf, die zur Überführung der Einrichtung von der abgerollten Stellung in die aufgerollte Stellung und/oder zurück ausgebildet ist. Die Rollachse ist dabei insbesondere parallel oder koaxial zur Stellachse bzw. zur Längsmittelachse angeordnet. Die Vorrichtung wird in der aufgerollten Stellung insbesondere als Ganzes von der Einrichtung umgeben. In der Rollvorrichtung dient die Vorrichtung insbesondere zu einem Aufrollen der Einrichtung, die insbesondere als Jalousie, Rolltor oder dgl. dient. Die Rollachse ist dabei insbesondere horizontal oder vertikal angeordnet.

Weitere Einzelheiten und Vorteile der Erfindung sind den nachfolgend beschriebenen, schematisch dargestellten Figuren zu entnehmen; es zeigen:
- Fig. 1: eine erfindungsgemäße Vorrichtung in einer perspektivischen Darstellung,
- Fig. 2: die erfindungsgemäße Vorrichtung gem. Fig. 1 in einer Seitenansicht, wobei das Gehäuse und die Steuervorrichtung nur teilweise dargestellt sind,
- Fig. 3: die erfindungsgemäße Vorrichtung gem. Fig. 1 in einer Explosionsdarstellung,
- Fig. 4: die erfindungsgemäße Vorrichtung gem. Fig. 1 in einer perspektivischen Darstellung bei nur teilweiser Darstellung des Gehäuses,
- Fig. 5: die erfindungsgemäße Vorrichtung gem. Fig. 1 in einer Draufsicht wiederum bei nur teilweiser Darstellung des Gehäuses,
- Fig. 6: einen Hubtisch mit einer erfindungsgemäßen Vorrichtung in einer perspektivischen Darstellung,
- Fig. 7: die vom Hubtisch gem. Fig. 6 umfasste Vorrichtung,
- Fig. 8: eine Rollvorrichtung mit einer erfindungsgemäßen Vorrichtung in einer perspektivischen Darstellung,
- Fig. 9a bis d: Anzeigeelemente einer ersten Sensorvorrichtung in unterschiedlichen Konfigurationen,
- Fig. 10a bis d: Anzeigeelemente einer zweiten Sensorvorrichtung in unterschiedlichen Konfigurationen,
- Fig. 11a bis f: Anzeigeelemente einer dritten Sensorvorrichtung in unterschiedlichen Konfigurationen,
- Fig. 12a bis d: weiterer Sensorvorrichtungen mit unterschiedlich angeordneten Anzeigeelementen.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

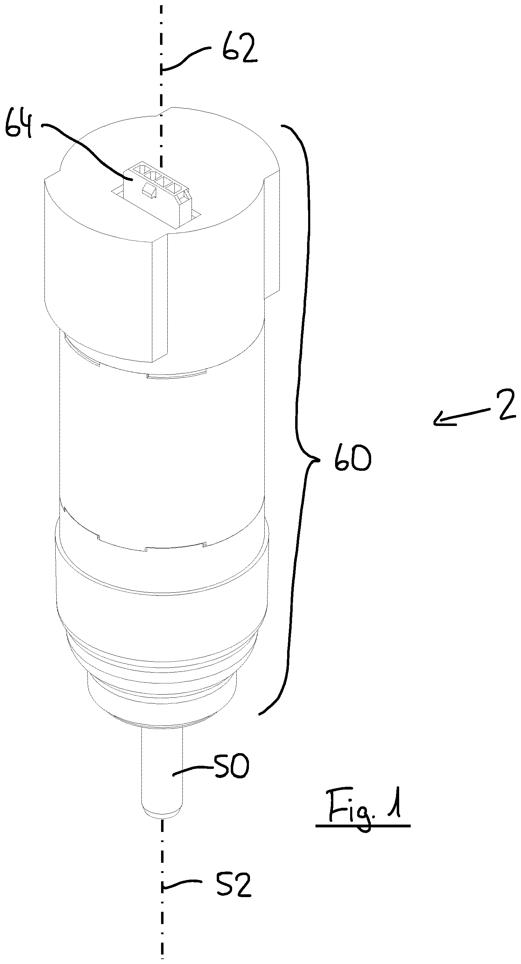

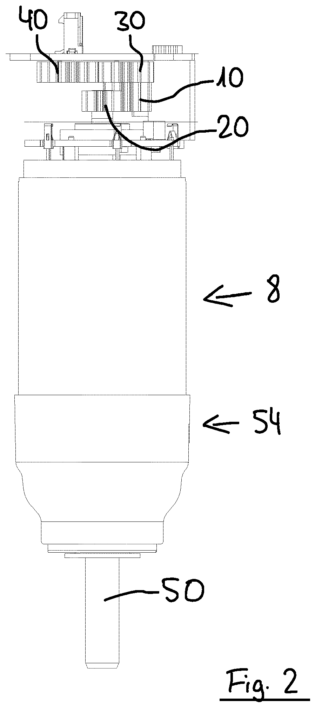

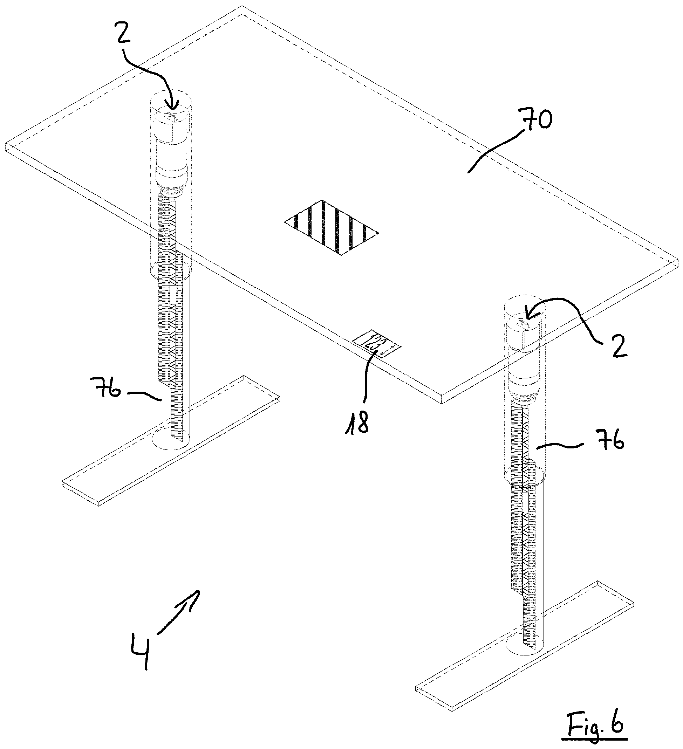

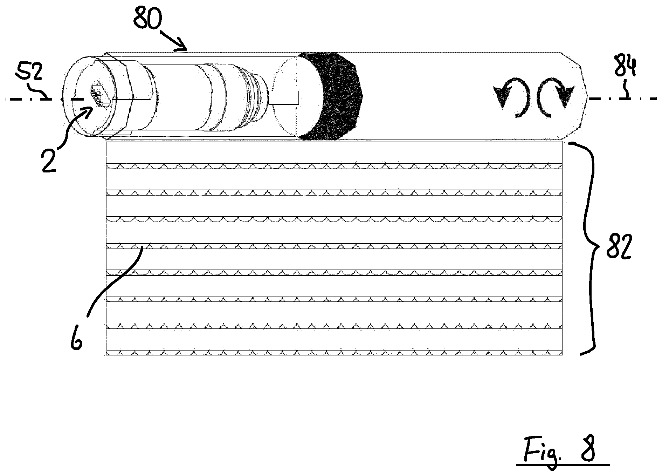

Die Fig. 1 bis 5 zeigen eine erste erfindungsgemäße Vorrichtung 2. Diese ist zu einer translatorischen Bewegung von Einrichtungen 6, 70 wie Hubtischen bzw. deren Tisch- oder Arbeitsplatte (vgl. Fig. 6) oder Rollläden von Rollvorrichtungen (vgl. Fig. 8) ausgebildet.

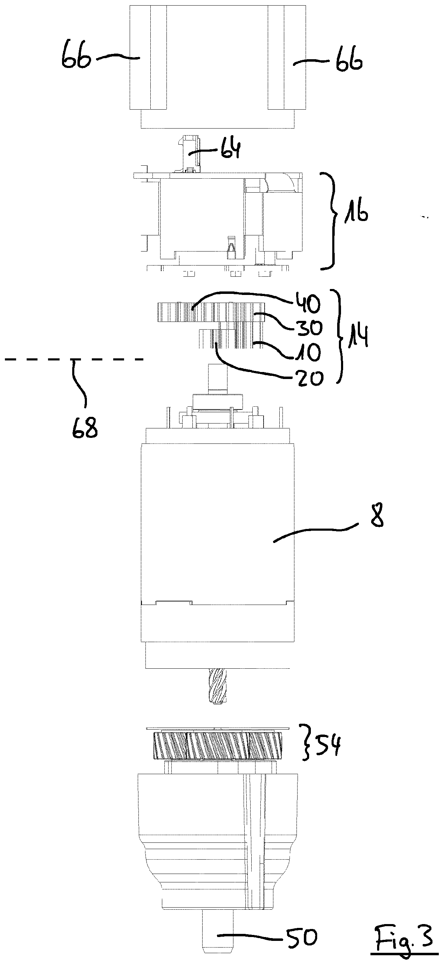

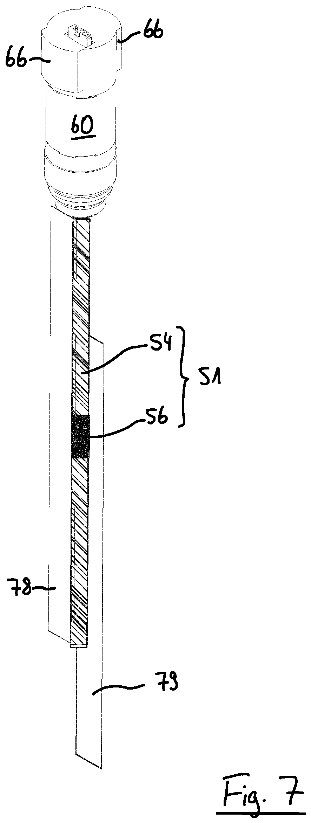

Die erfindungsgemäße Vorrichtung 2 weist einen Antrieb 8 zur Erzeugung einer Drehbewegung auf, der insbesondere als Elektromotor ausgebildet ist. An der Einrichtung 6,70 ist zur Übertragung mechanischer Leistung eine Stellvorrichtung 51 anzuordnen. Ein Stellelement 50 der Stellvorrichtung 51 ist mit dem Antrieb 8 gekoppelt und um eine Stellachse 52 drehbar (vgl. insbesondere Fig. 1 und 3). Die Stellvorrichtung 51 umfasst dabei insbesondere ein Gewindespindelelement 55 und ein Schlittenelement 56, das bei einer Rotation des Gewindespindelelementes 55 um die Stellachse 52 entlang der Stellachse 52 verschoben wird (vgl. Fig. 7). Zwischen dem Antrieb 8 und dem Stellelement 50 ist ein als Planetengetriebe ausgebildetes Untersetzungsgetriebe 54 mit einem Übersetzungsverhältnis von i = 11,4 angeordnet.

Der Antrieb 8 ist bezogen auf die Stellachse 52 zwischen dem Stellelement 50 und einer Sensorvorrichtung 14 angeordnet. Die Sensorvorrichtung 14 ist zur Aufnahme von Sensordaten zur Ermittlung einer Stellung der Einrichtung 6, 70 ausgebildet. Eine außerdem von der Vorrichtung 2 umfasste Steuervorrichtung 16 ist zur Ansteuerung des Antriebs 8 in Abhängigkeit von den Sensordaten ausgebildet.

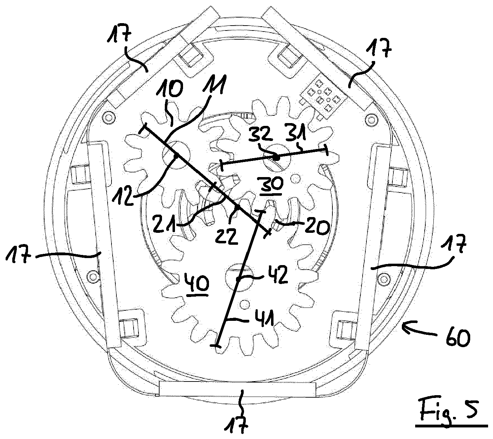

Sie Sensorvorrichtung 14 umfasst vier Anzeigeelemente 10,20,30,40, die jeweils um eine Anzeigeachse 12,22,32,42 drehbar gelagert sind. Sämtliche Anzeigeelemente 10,20,30,40 sind als Zahnräder ausgebildet (vgl. insbesondere Fig. 5). Der Antrieb 8 hat zwei Abtriebe, die durch gegenüberliegende Enden derselben Welle ausgebildet sind. Der von dem Stellelement 50 abgewandte Abtrieb treibt unmittelbar das zweite Anzeigeelement 20 an, dessen Anzeigeachse 22 koaxial zur Stellachse 52 angeordnet ist. Das zweite Anzeigeelement 20 steht im Eingriff mit dem ersten Anzeigeelement 10, das wiederum steht im Eingriff mit dem dritten Anzeigeelement 30, welches wiederum im Eingriff mit dem vierten Anzeigeelement 40 steht. Somit wird von dem Antrieb 8 ein Drehmoment auf das zweite, das erste, das dritte und das vierte Anzeigeelement 10,20,30,40 übertragen.

Jedem Anzeigeelement 10,20,30,40 ist ein nicht dargestellter Sensor zugeordnet. Der dem ersten Anzeigeelement 10 zugeordnete erste Sensor ist zur Messung der Winkellage des ersten Anzeigeelementes 10 ausgebildet. Ebenso ist der dem vierten Anzeigeelement 40 zugeordnete vierte Sensor zur Messung der Winkellage des vierten Anzeigeelementes 40 ausgebildet. Dem zweiten Anzeigeelement 20 und dem dritten Anzeigeelement 30 zugeordnete Sensoren sind als Drehimpulsgeber ausgebildet, die zur Ausgabe nur eines Impulses pro Umdrehung des jeweiligen Anzeigeelementes 20,30 ausgebildet sind.

Fig. 5 zeigt, dass die Zähnezahlen der Anzeigeelemente 10,20,30,40 einhergehend mit ihren Wälzkreisdurchmessern 11,21,31,41 ausgehend von dem Antrieb 8 zunehmen. Das zweite Antriebselement 20 hat neun Zähne, das erste Antriebselement 10 hat elf Zähne, das dritte Antriebselement 30 hat dreizehn Zähne, das vierte Antriebselement 40 hat siebzehn Zähne. Diese Zähnezahlen sind Primzahlen und haben insofern keine gemeinsamen Primfaktoren.

Durch die gegebenen vier Anzeigeelemente 10,20,30,40 und die diesen zugeordneten Sensoren lässt sich die Stellung der zu bewegenden Einrichtung 6,70 in einem weiteren Bewegungsbereich eindeutig ermitteln, ohne dass dazu andere als die durch die genannten Sensoren aufgenommenen Sensordaten notwendig ist. Insbesondere sind keine Zähler zum Zählen zurückgelegter Umdrehungen, Abstandssensoren oder dergleichen erforderlich.

Der Antrieb 8, die Sensorvorrichtung 14, ein überwiegender Teil der Steuervorrichtung 16 und zumindest ein Teil des Stellelementes 50 sind durch ein Gehäuse 60 eingehaust (vgl. Fig. 1). Das Gehäuse 60 ist im Wesentlichen zylinderförmig ausgebildet, wobei eine Längsmittelachse 62 des Gehäuses mit der Stellachse 52 zusammenfällt. Auf der dem Stellelement 50 gegenüberliegenden Seite des Gehäuses 60 ist ein Verbindungselement 64 zur Verbindung der Vorrichtung 2 mit dem Stromnetz angeordnet. Das Gehäuse 60 weist außerdem zwei einander gegenüberliegende, radial vorstehende Drehmomentabstützelemente 66 auf, die eine formschlüssige Montage des Gehäuses 60 in den Einrichtungen 6,70 ermöglichen (vgl. Fig. 3 und 7).

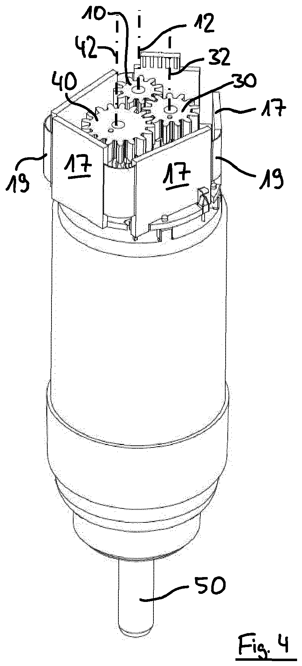

Im Ausführungsbeispiel gemäß Fig. 4 und 5 umfasst die Steuervorrichtung 16 fünf Leiterplatten 17. Die Längsmittelachse 62 erstreckt sich im Wesentlichen parallel zu den Leiterplatten 17. Zwischen der Längsmittelachse 62 und den Leiterplatten 17 sind die Anzeigeelemente 10,20,30,40 zumindest teilweise angeordnet. Die Steuervorrichtung umfasst außerdem einen nicht dargestellten Speicher zur Speicherung von zumindest einer Einrichtungskonfiguration, die automatisch angefahren werden kann. Außerdem umfasst die Steuervorrichtung 16 eine Benutzerschnittstelle 18 (vgl. Fig. 6) zur Variation der Einrichtungskonfiguration.

Das zweite Anzeigeelement 20 und das dritte Anzeigeelement 30 sind bezogen auf die Stellachse 52 versetzt zueinander angeordnet. Die erste Anzeigeachse 12, die dritte Anzeigeachse 32 und die vierte Anzeigeachse 42 schneiden jeweils eine zur Stellachse 52 rechtwinklige Hilfsebene 68 (vgl. Fig. 3). Die Schnittpunkte sind dabei derart angeordnet, dass sie die Eckpunkte eines gedachten, spitzwinkligen Dreieckes bilden.

Fig. 6 zeigt einen Hubtisch 4. Der Hubtisch 4 ist zu einer Variation eines Abstandes einer davon umfassten Tisch- oder Arbeitsplatte 70 von einer Aufstandsfläche bzw. Bodenfläche ausgebildet. Der Hubtisch 4 umfasst zwei Vorrichtungen 2, die jeweils in einem von zwei Tischbeinen 76 angeordnet sind. Die Tischbeine 76 sind dabei unterhalb sich gegenüberliegender Kopfenden der Tisch- oder Arbeitsplatte 70 angeordnet.

Die Stellvorrichtungen 51 der Vorrichtungen 2 umfassen je ein Gewindespindelelement 55 und ein Schlittenelement 56, wobei das Schlittenelement 56 zwei nicht dargestellte Umlenkelemente aufweist. Jedes Umlenkelement lenkt zumindest ein nicht dargestelltes Verbindungselement um, das einenends ortsfest zur Aufstandsfläche und anderenends ortsfest zur Tisch- oder Arbeitsplatte 70 angeordnet ist. Hierdurch sind die Verbindungselemente nach Art eines Flaschenzuges umgelenkt und ermöglichen ein Anheben der Tisch- oder Arbeitsplatte 70 um einen Weg, der doppelt so groß ist wie derjenige Weg, den das Schlittenelement 56 dabei entlang der Stellachse 52 zurücklegt.

Fig. 8 offenbart eine Rollvorrichtung 80. Die Rollvorrichtung 80 umfasst eine Vorrichtung 2 sowie eine Einrichtung 6. Die Einrichtung 6 weist eine Vielzahl von formstabilen Einrichtungssegmenten auf, die zueinander jeweils um zur Stellachse 52 parallele Schwenkachsen schwenkbar sind. Die Einrichtung 6 bildet in der dargestellten, abgerückten Stellung eine zumindest im Wesentlichen ebene Wandung 82 aus. In einer aufgerollten Stellung umgibt die Einrichtung 6 eine Rollachse 84 mehrlagig. Die Vorrichtung 2 ist zur Überführung der Einrichtung 6 von der angerollten in die aufgerollte Stellung und zurück ausgebildet. Die Rollachse 84 fällt dabei mit der Stellachse 52 zusammen. Außerdem wird in der aufgerollten Stellung durch die Vorrichtung 2 mehrlagig von einer Einrichtung 6 umgeben.

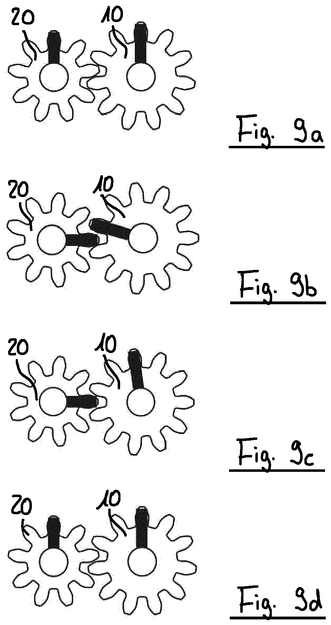

Die Figuren 9a bis 11f zeigen unterschiedliche Sensorvorrichtungen 14 jeweils in unterschiedlichen Konfigurationen und verdeutlichen den Vorteil einer Mehrzahl von Anzeigeelementen 10, 20, 30, 40.

Die Ausführungsform der Sensorvorrichtung 14 gemäß den Fig. 9a bis 9d ist nicht Teil der vorliegenden Erfindung, und weist zwei Anzeigeelemente 10, 20 auf, die neun bzw. elf Zähne aufweisen. In Fig. 9a befinden sich beide Anzeigeelemente 10, 20 in ihrer Ausgangsstellung (Drehwinkel 0°). In Fig. 9b ist das zweite Anzeigeelement 20 um einen Drehwinkel von 90° gegenüber seiner Ausgangsstellung verschwenkt. Das erste Anzeigeelement 10 ist dadurch richtungsmäßig gegenläufige nur um 74° verschwenkt, dass es eine entsprechend größere Zähnezahl aufweist (9/11 = 74/90). Fig. 9c zeigt die Stellung der Anzeigeelemente 10,20, nachdem das zweite Anzeigeelement 20 eine weitere, vollständige Umdrehung zurückgelegt hat (Gesamtdrehwinkel 450°). Die Fig. 9b und 9c verdeutlichen, dass die Winkellagen der gezeigten Anzeigeelement 10,20 mit ihrer Rotation voneinander abweichend variieren und eine Kombination der Winkellagen einem Gesamtdrehwinkel des zweiten Anzeigeelementes 20 eindeutig zuordenbar ist. Das ist der Fall bis zu einem Gesamtdrehwinkel des zweiten Anzeigeelements 20 von 3960° (Zähnezahl 11 des ersten Anzeigeelements 10 multipliziert mit 360°).

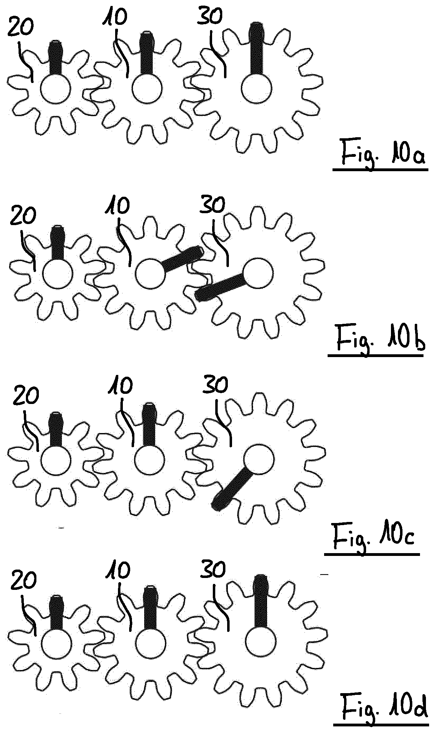

Die Fig. 10a bis d zeigen eine erfindungsgemäße
Sensorvorrichtung 14 mit drei Anzeigeelementen 10,20,30. Durch den mit dem dritten Anzeigeelement 30, das 13 Zähne aufweist, gegebenen weiteren Faktor und eine entsprechend gegebene Kombination aus drei Winkellagen lässt sich ein deutlich größerer Gesamtdrehwinkel erreichen, bis sämtliche Anzeigeelemente 10,20,30 wieder zusammen ihre Ausgangslage erreichen (Gesamtdrehwinkel des zweiten Anzeigeelementes 20 von 51.480° = 11 x 13 x 360°). Fig. 10a zeigt die Winkellagen bei einem Gesamtdrehwinkel von 0°, Fig. 10b die Winkellagen bei einem Gesamtdrehwinkel des zweiten Anzeigeelementes 20 von 360°, Fig. 10c die Winkellagen bei einem Gesamtdrehwinkel des zweiten Anzeigeelementes 20 von 3960° (gegenüber Fig. 9d), Fig. 10d die Winkellagen bei einem Gesamtdrehwinkel des zweiten Anzeigeelementes 20 von 51.480°.

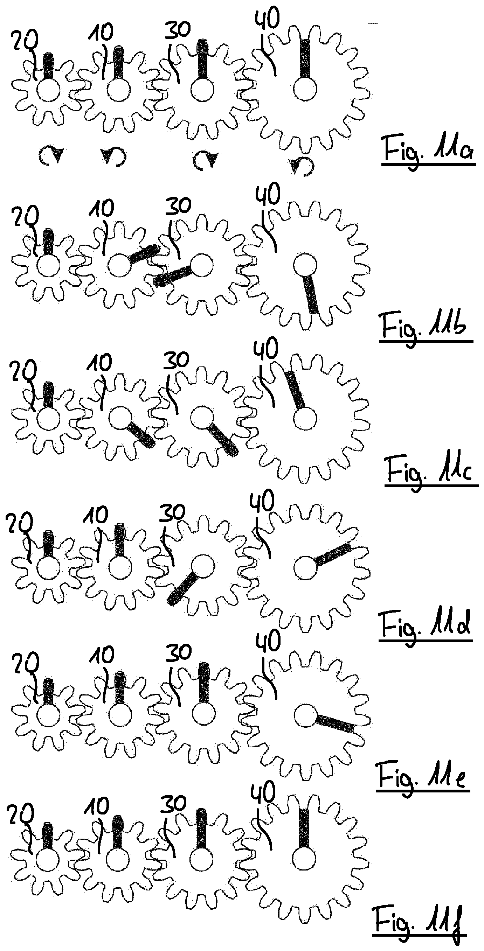

Die Fig. 11a bis 11f zeigen eine erfindungsgemäße Sensorvorrichtung 14 mit einem weiteren, vierten Anzeigeelement 40 mit 17 Zähnen. Hierdurch lässt sich der eindeutig zuordenbare Gesamtdrehwinkel des zweiten Anzeigeelements 20 auf 875.160° erhöhen. Die Zähnezahlen der gezeigten Anzeigeelemente 10, 20, 30, 40 stimmen mit denjenigen der Vorrichtung 2 gemäß den Fig. 1 bis 5 überein, so dass auch bei dieser Vorrichtung 2 die Stellung der Einrichtung bis zu einem Gesamtdrehwinkel des Antriebes von 875.160° eindeutig bestimmbar ist.

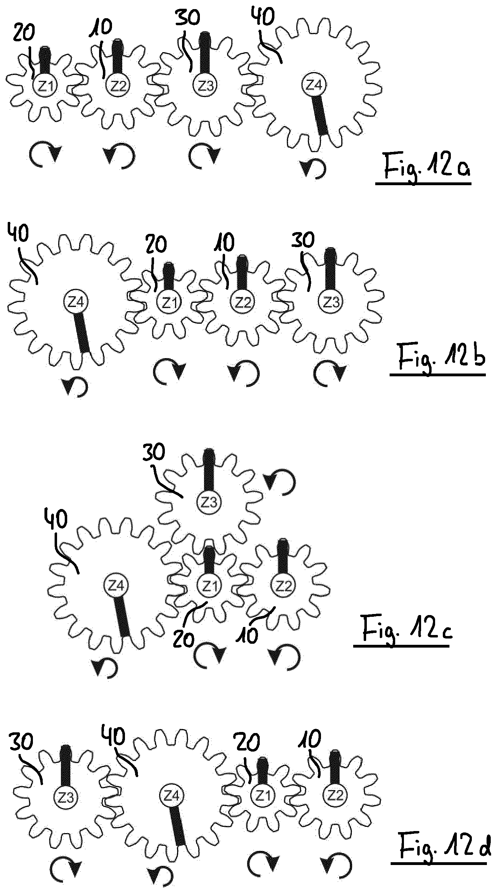

Die Fig. 12a bis 12d zeigen weitere Möglichkeiten der Anordnung der vier Anzeigeelemente 10,20,30,40 mit den genannten Zähnezahlen zueinander. Diese führen zu einem geringeren Bauraumanspruch der Vorrichtung 2.

## Patentansprüche

1. Vorrichtung (2) zur Bewegung von Einrichtungen (6, 70) wie Hubtischen, Rollläden, Markisen oder dergleichen, umfassend einen Antrieb (8) zur Erzeugung einer Drehbewegung, eine an einer Einrichtung anzuordnende Stellvorrichtung (51), aufweisend ein um eine Stellachse (52) drehbares und mit dem Antrieb gekoppeltes Stellelement (50), eine Sensorvorrichtung (14) mit einem als Winkelsensor ausgebildeten ersten Sensor zur Aufnahme von Sensordaten zur Ermittlung einer Stellung der Einrichtung (6, 70) und eine Steuervorrichtung (16), die zur Ansteuerung des Antriebs (8) in Abhängigkeit von den Sensordaten ausgebildet ist, wobei die Sensorvorrichtung (14) zumindest ein erstes Anzeigeelement (10) umfasst, das um eine erste, von der Stellachse (52) abweichende Anzeigeachse (12) zumindest schwenkbar gelagert ist und mit dem Stellelement (50) gekoppelt ist, und der erste Sensor zur Messung der Winkellage des ersten Anzeigeelementes (10) ausgebildet ist, wobei die Sensorvorrichtung (14) zumindest ein zweites Anzeigeelement (20) umfasst, das um eine von der ersten Anzeigeachse (12) abweichende, zweite Anzeigeachse (22) zumindest schwenkbar gelagert ist, das mit dem Stellelement (50) gekoppelt ist und dem ein zweiter von der Sensorvorrichtung (14) umfasster Sensor zur Aufnahme von Sensordaten zur Ermittlung der Stellung der Einrichtung (6, 70) zugeordnet ist, wobei sämtliche Anzeigeelemente (10, 20) als Zahnrad ausgebildet sind und unterschiedliche Wälzkreisdurchmesser (11, 21,31,41) aufweisen, wobei das Verhältnis der Wälzkreisdurchmesser (11, 21) benachbarter Anzeigeelemente (10, 20) zwischen 1/2 und 2 liegt und die Zähnezahlen der Anzeigeelemente (10, 20) keine gemeinsamen Primfaktoren haben, **dadurch gekennzeichnet, dass** die Sensorvorrichtung (14) zumindest ein drittes Anzeigeelement (30) umfasst, das um eine von der ersten und der zweiten Anzeigeachse (12, 22) abweichende dritte Anzeigeachse (32) zumindest schwenkbar gelagert ist, das mit dem Stellelement (50) gekoppelt ist und dem ein dritter von der Sensorvorrichtung (14) umfasster Sensor zur Aufnahme von Sensordaten zur Ermittlung der Stellung der Einrichtung (6, 70) zugeordnet ist.

2. Vorrichtung nach Anspruch 1, **dadurch gekennzeichnet, dass** die Sensorvorrichtung (14) zumindest ein viertes Anzeigeelement (40) umfasst, das um eine von der ersten, der zweiten und der dritten Anzeigeachse (12, 22, 32) abweichende vierte Anzeigeachse (42) zumindest schwenkbar gelagert ist, das mit dem Stellelement (50) gekoppelt ist und dem ein vierter von der Sensorvorrichtung (14) umfasster Sensor zur Aufnahme von Sensordaten zur Ermittlung der Stellung der Einrichtung (6, 70) zugeordnet ist.

3. Vorrichtung nach einem der vorhergehenden Ansprüche, **dadurch gekennzeichnet, dass** der zweite, der dritte und/oder der vierte Sensor zumindest dazu ausgebildet sind/ist, festzuhalten, wenn das zweite, das dritte bzw. das vierte Anzeigeelement (20, 30, 40) eine bestimmte Winkellage überschreitet, wobei der zweite, der dritte und/oder der vierte Sensor als Drehimpulsgeber ausgebildet sind/ist, der insbesondere zur Ausgabe genau eines Impulses pro Umdrehung des jeweiligen Anzeigeelementes (20, 30, 40) ausgebildet ist.

4. Vorrichtung nach Anspruch 1 oder 2, **dadurch gekennzeichnet, dass** der zweite, der dritte und/oder der vierte Sensor zumindest dazu ausgebildet sind/ist, festzuhalten, wenn das zweite, das dritte bzw. das vierte Anzeigeelement (20, 30, 40) eine bestimmte Winkellage überschreitet, wobei der zweite, der dritte und/oder der vierte Sensor als Winkelsensor ausgebildet sind/ist.

5. Vorrichtung nach einem der vorhergehenden Ansprüche, **dadurch gekennzeichnet, dass** das erste Anzeigeelement (20) derart zwischen dem zweiten und dem dritten Anzeigeelement (10, 30) angeordnet ist, dass im Betrieb von dem zweiten Anzeigeelement (10) eine Kraft auf das erste Anzeigeelement (20) und von dem ersten Anzeigeelement (20) eine Kraft auf das dritte Anzeigeelement (30) übertragen wird.

6. Vorrichtung nach einem der vorhergehenden Ansprüche, **dadurch gekennzeichnet, dass** der Wälzkreisdurchmesser (11) des ersten Anzeigeelementes (10) größer ist als der Wälzkreisdurchmesser (21) des zweiten Anzeigeelementes (20) und/oder der Wälzkreisdurchmesser (31) des dritten Anzeigeelementes (30) größer ist als der Wälzkreisdurchmesser (11) des ersten Anzeigeelementes (10) und/oder der Wälzkreisdurchmesser (41) des vierten Anzeigeelementes (40) größer ist als der Wälzkreisdurchmesser (31) des dritten Anzeigeelementes (30).

7. Vorrichtung nach einem der vorhergehenden Ansprüche, **dadurch gekennzeichnet, dass** die Wälzkreisdurchmesser (11, 21, 31, 41) der Anzeigeelemente (10, 20, 30 40) von Vielfachen der Wälzkreisdurchmesser (11, 21, 31, 41) der jeweils übrigen Anzeigeelementen (10, 20, 30, 40) abweichen.

8. Vorrichtung nach einem der vorhergehenden Ansprüche, **dadurch gekennzeichnet, dass** zumindest eine der Zähnezahlen, insbesondere sämtliche Zähnezahlen, Primzahlen sind.

9. Vorrichtung nach Anspruch 8, **dadurch gekennzeichnet, dass** eine erste der Zähnezahlen eine erste Primzahl ist und eine zweite der Zähnezahlen eine zweite, entlang der Primzahlenfolge benachbarte Primzahl oder eine Zahl ist, die zwischen der ersten Primzahl und der zweiten Primzahl liegt.

10. Vorrichtung nach einem der vorhergehenden Ansprüche, **dadurch gekennzeichnet, dass** die Stellvorrichtung (51) ein Gewindespindelelement (54) und ein derart an dem Gewindespindelelement (54) gelagertes Schlittenelement (56) aufweist, dass das Schlittenelement (56) bei einer Rotation des Gewindespindelelementes (54) um die Stellachse (52) entlang der Stellachse (52) verschoben wird.

11. Vorrichtung nach einem der vorhergehenden Ansprüche, **dadurch gekennzeichnet, dass** zumindest eines der Anzeigeelemente (10, 20, 30, 40) bei einer Betrachtung der Sensorvorrichtung (14) in Richtung der Stellachse (52) ein weiteres der Anzeigeelemente (20) zumindest teilweise verdeckt.

12. Vorrichtung nach einem der vorhergehenden Ansprüche, **dadurch gekennzeichnet, dass** die Anzeigeachsen (12, 22, 32, 42) zueinander parallel angeordnet sind und insbesondere die Schnittpunkte von drei der Anzeigeachsen (12, 22, 32, 42) mit einer dazu rechtwinkligen Hilfsebene (68) ein spitzwinkliges Dreieck aufspannen.

## Claims

1. Apparatus (2) for moving devices (6, 70) such as lifting tables, roller blinds, awnings or the like, comprising a drive (8), for producing a rotary movement, an adjusting device (51), which is to be arranged on a device and has an adjusting element (50) which is rotatable about an adjusting axis (52) and is coupled to the drive, a sensor device (14) with a first sensor, designed as an angle sensor, for receiving sensor data for determining the position of the device (6, 70), and a control device (16), which is designed for activating the drive (8) in dependence on the sensor data, wherein the sensor device (14) comprises at least one first indicating element (10), which is at least pivotably mounted about a first indicating axis (12), differing from the adjusting axis (52), and is coupled to the adjusting element (50), and the first sensor is designed for measuring the angular position of the first indicating element (10), wherein the sensor device (14) comprises at least one second indicating element (20), which is at least pivotably mounted about a second indicating axis (22), differing from the first indicating axis (12), is coupled to the adjusting element (50) and assigned to which is a second sensor, comprised by the sensor device (14), for receiving sensor data for determining the position of the device (6, 70), wherein all of the indicating elements (10, 20) are designed as a gearwheel and have different pitch circle diameters (11, 21, 31, 41), wherein the ratio of the pitch circle diameter (11, 21) of adjacent indicating elements (10, 20) lies between 1/2 and 2 and the numbers of teeth of the indicating elements (10, 20) have no common prime factors, **characterized in that** the sensor device (14) comprises at least one third indicating element (30), which is at least pivotably mounted about a third indicating axis (32), differing from the first and the second indicating axis (12, 22), is coupled to the adjusting element (50) and assigned to which is a third sensor, comprised by the sensor device (14), for receiving sensor data for determining the position of the device (6, 70).

2. Apparatus according to Claim 1, **characterized in that** the sensor device (14) comprises at least one fourth indicating element (40), which is at least pivotably mounted about a fourth indicating axis (42), differing from the first, the second and the third indicating axis (12, 22, 32), is coupled to the adjusting element (50) and assigned to which is a fourth sensor, comprised by the sensor device (14), for receiving sensor data for determining the position of the device (6, 70).

3. Apparatus according to one of the preceding claims, **characterized in that** the second, the third and/or the fourth sensor are/is at least designed to establish when the second, the third or the fourth indicating element (20, 30, 40) exceeds a specific angular position, wherein the second, the third and/or the fourth sensor are/is designed as a rotary pulse encoder, which is designed in particular for the output of exactly one pulse per revolution of the respective indicating element (20, 30, 40) .

4. Apparatus according to Claim 1 or 2, **characterized in that** the second, the third and/or the fourth sensor are/is at least designed to establish when the second, the third or the fourth indicating element (20, 30, 40) exceeds a specific angular position, wherein the second, the third and/or the fourth sensor are/is designed as an angle sensor.

5. Apparatus according to one of the preceding claims, **characterized in that** the first indicating element (20) is arranged between the second and the third indicating element (10, 30) in such a way that during operation a force is transmitted from the second indicating element (10) to the first indicating element (20) and a force is transmitted from the first indicating element (20) to the third indicating element (30).

6. Apparatus according to one of the preceding claims, **characterized in that** the pitch circle diameter (11) of the first indicating element (10) is greater than the pitch circle diameter (21) of the second indicating element (20) and/or the pitch circle diameter (31) of the third indicating element (30) is greater than the pitch circle diameter (11) of the first indicating element (10) and/or the pitch circle diameter (41) of the fourth indicating element (40) is greater than the pitch circle diameter (31) of the third indicating element (30).

7. Apparatus according to one of the preceding claims, **characterized in that** the pitch circle diameters (11, 21, 31, 41) of the indicating elements (10, 20, 30, 40) differ from multiples of the pitch circle diameters (11, 21, 31, 41) of the other indicating elements (10, 20, 30, 40) respectively.

8. Apparatus according to one of the preceding claims, **characterized in that** at least one of the numbers of teeth, in particular all of the numbers of teeth, are prime numbers.

9. Apparatus according to Claim 8, **characterized in that** a first of the numbers of teeth is a first prime number and a second of the numbers of teeth is a second prime number, next in the sequence of prime numbers, or a number which lies between the first prime number and the second prime number.

10. Apparatus according to one of the preceding claims, **characterized in that** the adjusting device (51) has a threaded spindle element (54) and a slide element (56) mounted on the threaded spindle element (54) in such a way that the slide element (56) is displaced along the adjusting axis (52) when there is a rotation of the threaded spindle element (54) about the adjusting axis (52) .

11. Apparatus according to one of the preceding claims, **characterized in that** at least one of the indicating elements (10, 20, 30, 40) at least partially covers a further one of the indicating elements (20) when the sensor device (14) is viewed in the direction of the adjusting axis (52).

12. Apparatus according to one of the preceding claims, **characterized in that** the indicating axes (12, 22, 32, 42) are arranged parallel to one another and in particular the points of intersection of three of the indicating axes (12, 22, 32, 42) together with an auxiliary plane (68) at right angles thereto define an acute-angled triangle.

## Revendications

1. Dispositif (2) permettant de déplacer des équipements (6, 70), tels que des tables élévatrices, des volets roulants, des stores ou similaires, comprenant un mécanisme d'entraînement (8) pour générer un mouvement rotatif, un dispositif de réglage (51) à disposer au niveau d'un équipement et présentant un élément de réglage (50) pouvant tourner autour d'un axe de réglage (52) et couplé au mécanisme d'entraînement, un dispositif capteur (14) comprenant un premier capteur réalisé sous la forme d'un capteur d'angle pour enregistrer des données de capteur servant à établir une position de l'équipement (6, 70), et un dispositif de commande (16) qui est réalisé pour piloter le mécanisme d'entraînement (8) en fonction des données de capteur, dans lequel le dispositif capteur (14) comprend au moins un premier élément indicateur (10) qui est monté au moins pivotant autour d'un premier axe indicateur (12) différent de l'axe de réglage (52), et est couplé à l'élément de réglage (50), et le premier capteur est réalisé pour mesurer la position angulaire du premier élément indicateur (10), dans lequel le dispositif capteur (14) comprend au moins un deuxième élément indicateur (20) qui est monté au moins pivotant autour d'un deuxième axe indicateur (22) différent du premier axe indicateur (12), qui est couplé à l'élément de réglage (50) et auquel est associé un deuxième capteur inclus dans le dispositif capteur (14) pour enregistrer des données de capteur servant à établir la position de l'équipement (6, 70), dans lequel tous les éléments indicateurs (10, 20) sont réalisés sous forme de roue dentée et présentent différents diamètres de cercle de roulement (11, 21, 31, 41), dans lequel le rapport des diamètres de cercle de roulement (11, 21) d'éléments indicateurs voisins (10, 20) est compris entre 1/2 et 2, et les nombres de dent des éléments indicateurs (10, 20) n'ont aucun facteur premier commun,
**caractérisé en ce que** le dispositif capteur (14) comprend au moins un troisième élément indicateur (30) qui est monté au moins pivotant autour d'un troisième axe indicateur (32) différent du premier et du deuxième axe indicateur (12, 22), qui est couplé à l'élément de réglage (50) et auquel est associé un troisième capteur inclus dans le dispositif capteur (14) pour enregistrer des données de capteur servant à établir la position de l'équipement (6, 70).

2. Dispositif selon la revendication 1, **caractérisé en ce que** le dispositif capteur (14) comprend au moins un quatrième élément indicateur (40) qui est monté au moins pivotant autour d'un quatrième axe indicateur (42) différent du premier, du deuxième et du troisième axe indicateur (12, 22, 32), qui est couplé à l'élément de réglage (50) et auquel est associé un quatrième capteur inclus dans le dispositif capteur (14) pour enregistrer des données de capteur servant à établir la position de l'équipement (6, 70).

3. Dispositif selon l'une quelconque des revendications précédentes, **caractérisé en ce que** le deuxième, le troisième et/ou le quatrième capteur sont réalisés au moins pour retenir quand le deuxième, le troisième ou le quatrième élément indicateur (20, 30, 40) dépasse une position angulaire déterminée, dans lequel le deuxième, le troisième et/ou le quatrième capteur sont réalisés sous forme de codeurs d'impulsions rotatifs qui sont en particulier réalisés pour sortir exactement une impulsion par tour de l'élément indicateur (20, 30, 40) respectif.

4. Dispositif selon la revendication 1 ou 2, **caractérisé en ce que** le deuxième, le troisième et/ou le quatrième capteur sont au moins réalisés pour retenir quand le deuxième, le troisième ou le quatrième élément indicateur (20, 30, 40) dépasse une position angulaire déterminée, dans lequel le deuxième, le troisième et/ou le quatrième capteur sont réalisés sous forme de capteurs d'angle.

5. Dispositif selon l'une quelconque des revendications précédentes, **caractérisé en ce que** le premier élément indicateur (20) est disposé entre le deuxième et le troisième élément indicateur (10, 30) de telle sorte qu'en cours de fonctionnement, le deuxième élément indicateur (10) transmet une force au premier élément indicateur (20), et le premier élément indicateur (20) transmet une force au troisième élément indicateur (30).

6. Dispositif selon l'une quelconque des revendications précédentes, **caractérisé en ce que** le diamètre de cercle de roulement (11) du premier élément indicateur (10) est supérieur au diamètre de cercle de roulement (21) du deuxième élément indicateur (20), et/ou le diamètre de cercle de roulement (31) du troisième élément indicateur (30) est supérieur au diamètre de cercle de roulement (11) du premier élément indicateur (10), et/ou le diamètre de cercle de roulement (41) du quatrième élément indicateur (40) est supérieur au diamètre de cercle de roulement (31) du troisième élément indicateur (30).

7. Dispositif selon l'une quelconque des revendications précédentes, **caractérisé en ce que** les diamètres de cercle de roulement (11, 21, 31, 41) des éléments indicateurs (10, 20, 30 40) sont différents de multiples du diamètre de cercle de roulement (11, 21, 31, 41) des éléments indicateurs (10, 20, 30, 40) respectivement restants.

8. Dispositif selon l'une quelconque des revendications précédentes, **caractérisé en ce qu'**au moins l'un des nombre de dents, en particulier tous les nombres de dents, est un nombre premier.

9. Dispositif selon la revendication 8, **caractérisé en ce qu'**un premier des nombres de dents est un premier nombre premier, et un deuxième des nombres de dents est un deuxième nombre premier voisin dans la séquence de nombres premiers ou est un nombre situé entre le premier nombre premier et le deuxième nombre premier.

10. Dispositif selon l'une quelconque des revendications précédentes, **caractérisé en ce que** le dispositif de réglage (51) présente un élément de broche filetée (54) et un élément de chariot (56) monté sur l'élément de broche filetée (54) de telle sorte qu'en cas de rotation de l'élément de broche filetée (54) autour de l'axe de réglage (52) l'élément de chariot (56) est décalé le long de l'axe de réglage (52) .

11. Dispositif selon l'une quelconque des revendications précédentes, **caractérisé en ce que**, si le dispositif capteur (14) est vu en direction de l'axe de réglage (52), au moins l'un des éléments indicateurs (10, 20, 30, 40) recouvre au moins partiellement un autre des éléments indicateurs (20).

12. Dispositif selon l'une quelconque des revendications précédentes, **caractérisé en ce que** les axes indicateurs (12, 22, 32, 42) sont disposés en parallèle les uns aux autres, et en particulier les points d'intersection de trois des axes indicateurs (12, 22, 32, 42) forment avec un plan auxiliaire perpendiculaire (68) un triangle acutangle.
